# EUROPÄISCHE PATENTSCHRIFT

(11) **EP 1 826 104 B1**
(45) Veröffentlichungstag und Bekanntmachung des Hinweises auf die Patenterteilung: **01.08.2012**
(21) Anmeldenummer: 07003751.0
(22) Anmeldetag: 23.02.2007
(51) Int. Cl.: B62D 33/037, B62D 43/04

(54) **Anbindung für ein Transportgestell an ein Kraftfahrzeug**
Connection for a transport rack to a motor vehicle
Point de fixation pour un châssis de transport sur un véhicule automobile

(30) Priorität: 27.02.2006 DE 102006008904
(43) Veröffentlichungstag der Anmeldung: 29.08.2007
(73) Patentinhaber: GM Global Technology Operations LLC, Detroit, MI 48265-3000 (US)
(72) Erfinder: Poklitar, Mathias, 65474 Bischofsheim (DE); Unger, Rainer, 65239 Hochheim (DE); Wrobel, Bert, 55278 Undenheim (DE)
(74) Vertreter: Daniel, Ulrich W.P.

(56) Entgegenhaltungen:
- EP-A- 0 566 528
- FR-A- 342 607
- JP-A- 8 119 153

## Beschreibung

Die Erfindung betrifft eine Anbindung für ein Transportgestell an ein Kraftfahrzeug nach Anspruch 1, mit wenigstens einer Halterung für das Gestell, die über ein Befestigungselement mit einem Karosserieteil verbunden ist.

Derartige Transportgestelle für Kraftfahrzeuge sind unter anderem als Dach-, Heck- oder Unterbodenträger bekannt. Letztere werden bei Kraftfahrzeugen ohne Ersatzradmulde insbesondere als Ersatzradkäfig genutzt. Ein solcher Käfig wird zB bei einem Minivan der Kompaktwagenklasse unter dem Heckunterbau angebracht. Eine übliche Anbindung sieht dabei einen hinteren Haken und zwei vordere, einfach geschraubte Laschen vor, in denen Ausleger des zB aus einem (Rund)Stangenmaterial hergestellten Käfigs aufgenommen werden. Wie jedes andere Gestell muss auch dieser Käfig für die Aufgabenbereiche Service, Dauerlauf und Fahrzeugsicherheit ausgelegt werden. Um so wichtiger ist damit die einerseits gut zugängliche - abnehmbare oder bewegliche - und andererseits gleichzeitig stabile Anbindung des Käfigs an den Unterbau.

Im Falle eines Heckaufpralls haben sich allerdings die üblichen vorderen Anbindungen eines derartigen Transportgestells als ungünstig erwiesen, da dieses sich bei einer auftretenden Last leicht aus seinen Verankerungen löst. Dem wurde bislang durch eine entsprechend stärkere Verschraubung, Vernietung, Verschweißung oÄ entgegengewirkt, die teuer und aufwendig ist, ohne aber notwendigerweise auch eine Ablösung zu verhindern.

Das französische Patent Nr. 342607 zeigt einen Fahrzeuganhänger, bei dem eine Rückwand durch Schließvorrichtungen an Seitenwänden befestigt werden kann. Die Schließvorrichtungen sind jeweils über eine Halterung an der Rückwand befestigt.

Das gattungsgemäße US Patent Nr. 5,779,117 zeigt einen Toolbox-Adapter zum Montieren einer Toolbox, bei dem Adapterplatten mittels versetzter Schrauben an der Toolbox montiert werden.

Es ist Aufgabe der vorliegenden Erfindung, eine Anbindung für ein Transportgestell an ein Kraftfahrzeug zu schaffen, deren Stabilität erhöht und die einfach und kostengünstig zu realisieren ist.

Diese Aufgabe wird durch eine Anbindung nach Anspruch 1 oder 2 gelöst.

Ein wesentlicher Punkt der Erfindung besteht dabei darin, dass der hier tätige Erfinder den üblicherweise beschrittenen Weg einer reinen Verstärkung der Anbindung verlässt. Abweichend davon wurde nämlich in mehreren Versuchsreihen festgestellt, dass die Ablösung insbesondere durch Verdrehen der Halterung - und damit eine Lockerung des Sitzes zB von einer Schraubverbindung - unterstützt, wenn nicht gar verursacht wird. Der erfinderische Gedanke sieht dagegen vor, das Prinzip zB der bereits geschilderten Laschen mit eingelegtem Rundmaterial beizubehalten, aber die Anbindung verdrehsicher zu gestalten. Dadurch werden insbesondere Kippmomente reduziert, die senkrecht zur Längsachse eines Befestigungselements wirken, das die Halterung mit dem Karosserieteil verbindet. Die Ablösung der Anbindung zB unter den Lasten eines Heckaufpralls und ein Separieren des Gestells ist praktisch ausgeschlossen. Ein entsprechendes Sicherungselement kann in den nachfolgend beschriebenen Varianten einfach und kostengünstig realisiert werden, ohne dass eine Verstärkung der Anbindung erforderlich ist.

Dabei bildet das Sicherungselement einen Anschlag zwischen der Halterung und dem Karosserieteil. Dazu ist das Element mit der Karosserie fest verbunden wie zB verschweißt, und liegt gegen eine Außenkontur der Halterung an. Dadurch wird ein Verdrehen der beiden Teile gegeneinander praktisch ausgeschlossen. Ein solcher Anschlag ist zudem auf verschiedene Arten einfach und kostengünstig zu realisieren, wie im Folgenden beschrieben wird.

Danach ist das Sicherungselement bevorzugt plattenförmig ausgebildet und dort an der Halterung oder dem Karosserieteil befestigt, wo es einer potentiellen Drehung der Halterung am effektivsten entgegenwirkt. Dies kann zB durch Verschweißen mit dem Karosserieuntergrund geschehen. Durch die plattenförmige Ausprägung des Elements wird dabei sowohl die Verankerung als auch die Anschlagfläche erhöht, was für eine besonders große Stabilität sorgt. Die Lastübertragung am Sicherungselement - und dadurch die Stabilität der Verbindung - wird in beiden Fällen bevorzugt durch einen Anschlag erhöht, der eine formschlüssige Profilanlage bildet.

Obgleich eine Verankerung des Sicherungselements alternativ an der Halterung oder dem Karosserieteil möglich ist, ist eine Befestigung an der Karosserie erfindungsgemäß vorgesehen. Neben einem Verschweißen kann dies alternativ auch dadurch geschehen, dass das Sicherungselement einstückig mit der Karosserie ausgebildet ist, zB durch eine entsprechende Profilgebung der letzteren. Dadurch kann eine bislang übliche Halterung verwendet werden, die nach Montage allerdings verdrehsicher gegen das Karosserieteil anliegt. Eine erforderliche Formgebung des Karosserieteils an der Montagestelle fällt kostenmäßig kaum ins Gewicht.

Obwohl das Sicherungselement zum Bilden eines Anschlags auch grundsätzlich in die Halterung eingreifen oder diese durchgreifen kann, ist ein Anliegen an einer derer Außenkanten bevorzugt. Dadurch entfallen entsprechende Modifikationen an der üblicherweise verwendeten Halterung, wie zB eine (Pass)Bohrung oder ein Schlitz.

Gemäß der Erfindung ist das Sicherungselement als formschlüssige Profilverbindung zwischen der Halterung und dem Karosserieteil ausgebildet. Die Verbindung kann zB durch zwei ineinandergreifende Profile mit wellen- oder sägezahnförmiger Kontur bestimmt sein, wodurch eine besonders hohe Verdrehsicherheit der Halterung erzeugt wird. Da sich zusätzliche Teile erübrigen, stellt dies eine besonders kostengünstige und effektive Sicherung dar.

Gleich mehrere Vorteile entstehen, wenn das Karosserieteil als Montagewinkel ausgebildet ist. Zum einen entsteht eine Außenkante der Karosserie, die als Anschlag für ein halterungsseitig angeordnetes Sicherungselement nutzbar ist, ohne der Außenhaut an dieser Stelle eine dazu geeignete Kontur abzufordern. Alternativ lässt sich der Anschlag auch besonders einfach durch eine entsprechende Abkantung des Montagewinkels herstellen, die eine größere Anlagefläche erlaubt. Zudem ist dieser auch besonders einfach mit einem Rastprofil zu versehen, das im Zusammenspiel mit einer entsprechend gestalteten Oberfläche der Halterung ein gegenseitiges Verdrehen der Teile verhindert. Dadurch entsteht eine besonders einfache, montagefreundliche und kostengünstige Anbindung.

Grundsätzlich ist ein unterseitig an einem Fahrzeug angeordnetes Transportgestell durch zB Lösen von Schraubverbindungen zugänglich. Eine bewegliche und gleichzeitig stabile Anbindung wird gemäß der Erfindung dadurch erreicht, dass die Halterung zudem eine Lasche aufweist, an der das Transportgestell drehbar gelagert ist. Eine solche Drehbarkeit kann alternativ auch dadurch hergestellt werden, wenn die Halterung ein Scharnier aufweist, an der das Transportgestell drehbar gelagert ist.

Gleich wie schon vorstehend beschrieben wird ein an dem Karosserieteil befestigtes Sicherungselement auch gegen die Lasche der Halterung in Anschlag gebracht, wodurch der einer Verdrehung der Halterung entgegenwirkende Hebel verlängerbar ist. Dabei ist das Sicherungselement bevorzugt stiftförmig ausgebildet, um platzsparend gegen einen Querschnitt der Lasche anzuliegen.

Es bleibt darauf hinzuweisen, dass alle hier genannten Ausführungsformen untereinander kombinierbar sind, und deren spezifische Verbindung nur durch die Anforderungen des jeweiligen Einsatzzwecks bestimmt ist.

Die Erfindung wird im Folgenden anhand von drei Ausführungsbeispielen näher erläutert, wobei auf die zugehörigen Zeichnungen Bezug genommen wird. Gleiche oder gleichwirkende Teile sind mit gleichen Bezugsziffern versehen. Es zeigen:
- Figur 1a: eine Draufsicht auf eine bekannte linke und eine rechte vordere Anbindung eines Ersatzradkäfigs unter dem Heckunterbau eines Kraftfahrzeugs aus dem Stand der Technik;
- Figur 1b: die Draufsicht der Figur 1a mit den deformierten Anbindungen nach einem Heckaufprall;
- Figur 2: eine linksseitige Anbindung, mit einem Sicherungselement, das als zusätzliches Befestigungselement ausgebildet ist;
- Figur 3: eine linksseitige Anbindung, mit einem erfindungsgemäßen Sicherungselement, das als plattenförmiger Anschlag gegenüber einer Halterung der Anbindung ausgebildet ist, und
- Figur 4: die Anbindung der Figur 3, mit einem erfindungsgemäßen Sicherungselement, das als stiftförmiger Anschlag gegenüber einer Lasche der Anbindung ausgebildet ist.

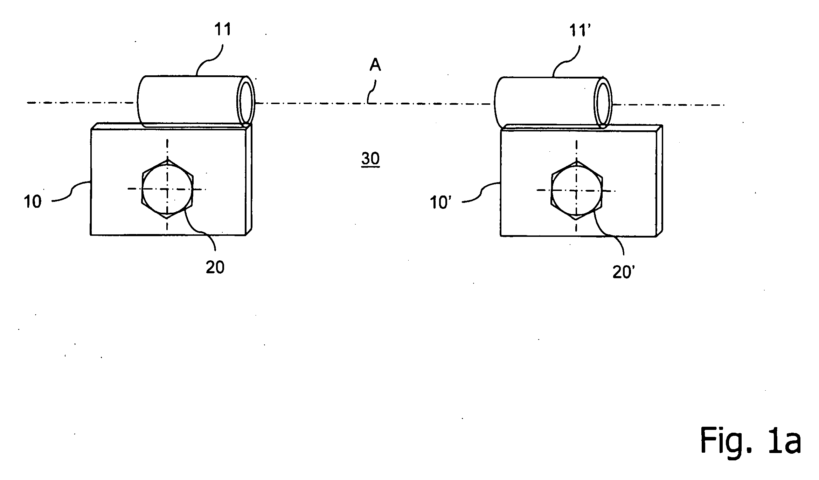

Die Figur 1a zeigt eine Draufsicht auf eine bekannte linke und eine rechte vordere Anbindung eines Ersatzradkäfigs unter dem Heckunterbau eines Kraftfahrzeugs. Die Anbindungen sind spiegelbildlich zueinander aufgebaut, so dass sich die Bezugsziffern in der rechten Anbindung erübrigen. Beide Anbindungen umfassen eine jeweilige Halterung 10 mit einer in Fahrtrichtung daran angebundenen Lasche 11. Die Halterung 10 ist über ein Befestigungselement 20 - hier beispielhaft eine Schraubverbindung - an einem darunter liegenden Karosserieteil 30 befestigt. Ein Transportgestell - hier ein Ersatzradkäfig (nicht gezeigt) - ist über eine Drehachse A an den Laschen 15 drehbar gelagert, und kann heckseitig (in Richtung unterer Blattrand) zum Einlegen bzw Entnehmen des Rads gelöst werden.

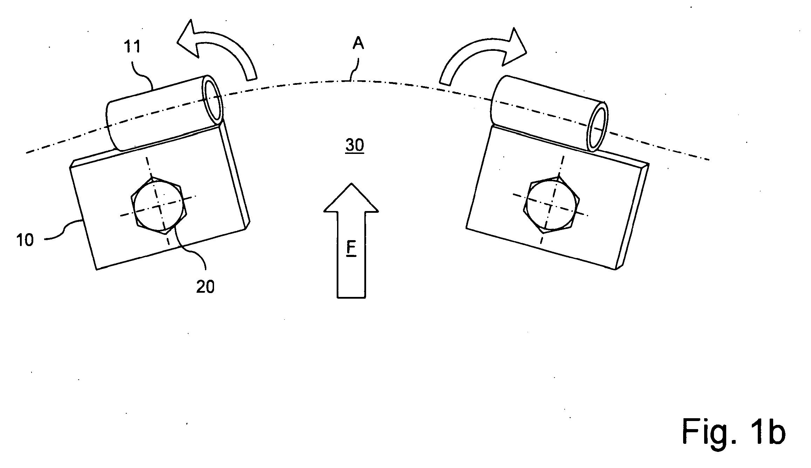

Die Figur 1b zeigt die Draufsicht der Figur 1a mit den deformierten Anbindungen nach einem Heckaufprall. Eine heckseitig einwirkende Kraft F verformt die Drehachse A des Gestells in Fahrtrichtung, wodurch sich die linke und rechtsseitige Anbindung den oberen Pfeilen folgend dreht. Dadurch lockern sich die Befestigungselemente 20 und können sich durch die auftretenden Kippmomente leicht von dem Karosserieteil lösen oder das Gestell aus den Laschen rutschen.

Die unterschiedlichen Ausführungsformen einer erfindungsgemäßen Anbindung gehen der Einfachheit halber von einer linksseitigen Anbindung aus, sind aber bevorzugt auch an der rechten Anbindung verwirklicht.

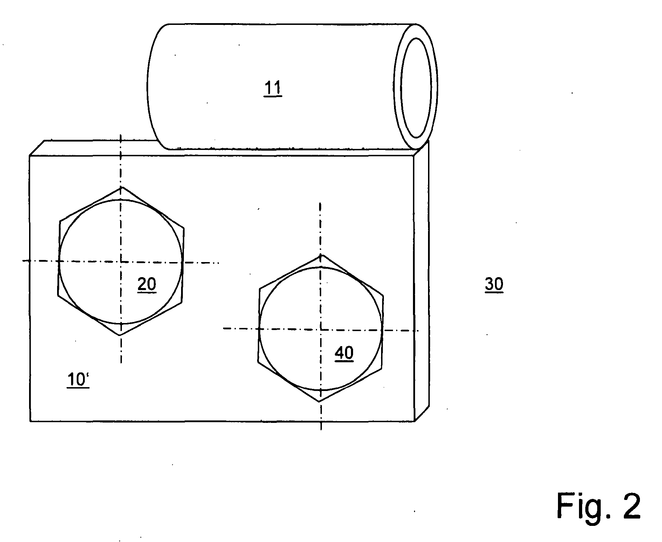

Die Figur 2, welche nicht Teil der Erfindung ist, zeigt eine linksseitige Anbindung, mit einem Sicherungselement 40, das als zusätzliches Befestigungselement - in diesem Beispiel wie das Befestigungselement 20 als Schraubverbindung - ausgebildet ist. Das Sicherungselement 40 verhindert dabei ein potentielles Verdrehen einer Halterung 10' um das Befestigungselement 20 bei einer Deformation der Drehachse A, deren Ausleger in der Lasche 11 geführt ist. Das Sicherungselement wirkt dabei einer Verdrehung sowohl durch kraftschlüssige Pressung der Halterung 10 gegen das Karosserieteil 30, wie auch in Form eines Anschlags zwischen den Teilen 10 und 20 entgegen. Da sich der Sitz des Elements 20 nicht lösen kann, ist eine Schwächung der Anbindung und die Möglichkeit einer Ablösung praktisch ausgeschlossen. Eine solche Anbindung ist einfach herzustellen und erfordert keine zusätzlichen montageseitigen Aufwendungen, ist damit schnell und kostengünstig zu realisieren.

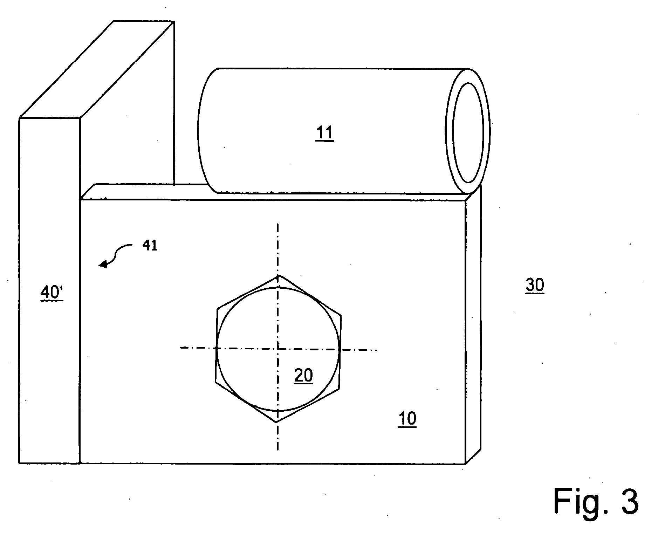

Die Figur 3 zeigt eine linksseitige Anbindung, mit einem erfindungsgemäßen Sicherungselement 40, das als plattenförmiger Anschlag 41 gegenüber der Halterung 10 ausgebildet ist. Die lange Anschlagsfläche wirkt dabei einer potentiellen Verdrehung der Halterung 10 besonders effektiv entgegen, so dass eine Ablösung der Anbindung bei einem Heckaufprall praktisch ausgeschlossen ist. Darüber hinaus ist durch eine derartige Anordnung ein Verdrehen der Halterung 10 in beide Richtungen - also mit und entgegen dem Uhrzeigersinn - blockiert, wodurch eine Ablösung der Anbindung unabhängig von der tatsächlichen Verformung der Drehachse praktisch ausgeschlossen ist. Das Element 40 ist in diesem Beispiel mit dem Karosserieteil 30 verschweißt. Grundsätzlich kann der Anschlag 41 aber auch durch eine entsprechende Profilgebung des Karosserieteils 30 selbst zur Verfügung gestellt werden. Die hier vorgestellte Lösung ist aber besonders einfach und kostengünstig zu realisieren, dabei zudem äußerst wirksam.

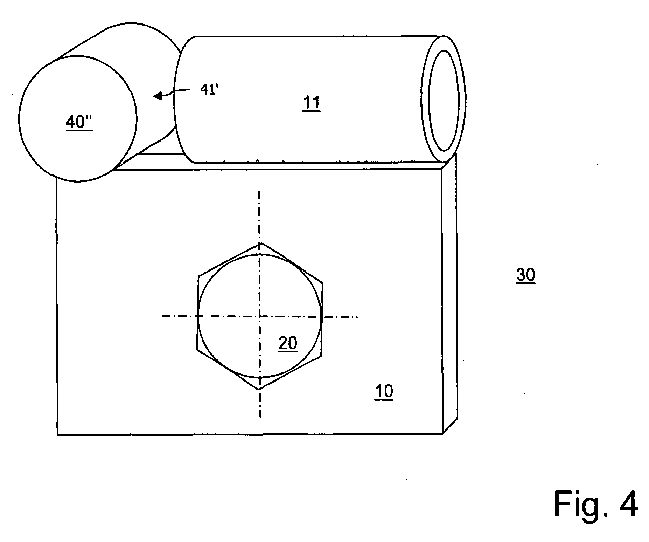

Die Figur 4 schließlich zeigt die Anbindung der Figur 3, mit einem zweiten erfindungsgemäßen Sicherungselement 40", das stiftförmige ausgebildet ist und einen Anschlag 41' gegenüber der Lasche 15 bildet. Das Sicherungselement 40'' ist dazu in diesem Beispiel ebenfalls mit dem Karosserieteil 30 verschweißt. Auch damit wird eine potentielle Verdrehung der Halterung 10 wirksam verhindert, wobei das Sicherungselement 40" zudem platzsparend zwischen der Halterung 10 und der Lasche 11 angeordnet ist. Auch diese Anordnung schließt - ähnlich wie die plattenförmige Ausprägung - ein Verdrehen der Halterung 10 in beide Richtungen aus, was eine Ablösung der Anbindung sicher verhindert.

Alle vorstehend beschriebenen Ausführungsformen lassen sich miteinander kombinieren und schließen sich nicht aus. Jede spezifische Kombination wird durch den gewünschten Einsatzzweck bestimmt. Die erfindungsgemäßen Anbindungen zeichnen sich durch besondere Stabilität aus und bieten gleichzeitig eine gute Zugänglichkeit zum - abnehmbaren oder beweglichen - Transportgestell. Eine Ablösung der Anbindungen im Fall eines Unfallereignisses wird praktisch ausgeschlossen.

### Bezugszeichenliste

- 10, 10': Halterung
- 11: Lasche
- 20: Befestigungselement
- 30: Karosserieteil
- 40; 40'; 40": Sicherungselement
- 41; 41': Anschlag
- A: Drehachse des Traggestells
- F: Krafteinwirkung

## Patentansprüche

1. Anbindung eines Transportgestells an ein Kraftfahrzeug, mit wenigstens einer Halterung (10; 10') für das Gestell, die über ein Befestigungselement (20) mit einem Karosserieteil (30) verbunden ist, **gekennzeichnet durch** zumindest ein Sicherungselement (40; 40'; 40"), das so ausgebildet und angeordnet ist, dass die Halterung (10, 10') bei einer Deformation des Gestells gegen ein Verdrehen um das Befestigungselement (20) **dadurch** blockiert ist, dass das Sicherungselement (40') einen Anschlag (41) zwischen der Halterung (10) und dem Karosserieteil (30) bildet und an dem Karosserieteil (30) befestigt ist, wobei das Sicherungselement als formschlüssige Profilverbindung zwischen der Halterung (10) und dem Karosserieteil (30) derart ausgebildet ist, dass hierdurch eine Verdrehsicherung für die Halterung (10) erzeugt wird.

2. Anbindung eines Transportgestells an ein Kraftfahrzeug, mit wenigstens einer Halterung (10; 10') für das Gestell, die über ein Befestigungselement (20) mit einem Karosserieteil (30) verbunden ist, **gekennzeichnet durch** zumindest ein Sicherungselement (40; 40'; 40"), das so ausgebildet und angeordnet ist, dass die Halterung (10, 10') bei einer Deformation des Gestells gegen ein Verdrehen um das Befestigungselement (20) **dadurch** blockiert ist, dass das Sicherungselement (40) einen Anschlag (41) zwischen der Halterung (10) und dem Karosserieteil (30) bildet und an dem Karosserieteil (30) befestigt ist, wobei die Halterung (10; 10') eine Lasche (11) aufweist, an der das Transportgestell drehbar gelagert ist und wobei das Sicherungselement (40'') einen Anschlag (41') zwischen der Lasche (11) und dem Karosserieteil (30) bildet.

3. Anbindung nach Anspruch 1 oder 2, bei der das Sicherungselement (40') plattenförmig ausgebildet ist.

4. Anbindung nach einem der vorstehenden Ansprüche, bei der das Sicherungselement (40') gegen eine Außenkante der Halterung (10) anliegt.

5. Anbindung nach einem der vorstehenden Ansprüche, bei der die Halterung (10; 10') ein Scharnier aufweist, an der das Transportgestell drehbar gelagert ist.

6. Anbindung nach Anspruch 2, bei der das Sicherungselement (40'') stiftförmig ausgebildet ist.

7. Anbindung nach einem der vorstehenden Ansprüche, bei der das Sicherungselement als zusätzliches Befestigungselement zwischen der Halterung (10') und dem Karosserieteil (30) ausgebildet ist.

8. Anbindung nach Anspruch 7, bei der das Sicherungselement (40) eine Schraub- oder Nietverbindung umfasst.

9. Verwendung einer Anbindung nach einem der vorstehenden Ansprüche zur Aufhängung eines Ersatzradkäfigs an einem Kraftfahrzeug.

## Claims

1. A connection of a transport frame with a motor vehicle, comprising at least one mount (10; 10') for the frame which is connected with a body part (30) via a fixing element (20), **characterized by** at least one securing element (40; 40'; 40") which is configured and arranged in such a way that the mount (10; 10') is blocked against twisting about the fixing element (20) during deformation of the frame in such a way that the securing element (40) forms a stop (41) between the mount (10) and the body part (30) and is fixed to the body part (30), with the securing element being arranged as an interlocking profile connection between the mount (10) and the body part (30) in such a way that an anti-twist protection for the mount (10) is produced thereby.

2. A connection of a transport frame with a motor vehicle, comprising at least one mount (10; 10') for the frame which is connected with a body part (30) via a fixing element (20), **characterized by** at least one securing element (40; 40'; 40") which is configured and arranged in such a way that the mount (10; 10') is blocked against twisting about the fixing element (20) during deformation of the frame in such a way that the securing element (40) forms a stop (41) between the mount (10) and the body part (30) and is fixed to the body part (30), with the mount (10; 10') comprising a bracket (11) on which the transport frame is rotatably held, and with the securing element (40") forming a stop (41') between the bracket (11) and the body part (30).

3. A connection according to claim 1 or 2, wherein the securing element (40') is arranged in a plate-like way.

4. A connection according to one of the preceding claims, wherein the securing element (40') rests on an outside edge of the mount (10).

5. A connection according to one of the preceding claims, wherein the mount (10; 10') comprises a hinge on which the transport frame is rotatably held.

6. A connection according to claim 2, wherein the securing element (40") is arranged in the manner of a pin.

7. A connection according to one of the preceding claims, wherein the securing element is arranged as an additional fixing element between the mount (10') and the body part (30).

8. A connection according to claim 7, wherein the securing element (40) comprises a screwed or riveted joint.

9. The use of a connection according to one of the preceding claims for suspending a spare-wheel cage on a motor vehicle.

## Revendications

1. Liaison d'un châssis de transport à un véhicule à moteur, avec au moins une fixation (10; 10') pour le châssis, qui est reliée par l'intermédiaire d'un élément de fixation (20) à une pièce de carrosserie (30), **caractérisée en ce qu'**elle comprend au moins un élément de sûreté (40; 40'; 40") conçu et disposé de telle manière que lors d'une déformation du châssis, la fixation (10, 10') soit empêchée de tourner autour de l'élément de fixation (20) par le fait que l'élément de sûreté (40) forme une butée (41) entre la fixation (10) et la pièce de carrosserie (30) et est fixé à la pièce de carrosserie (30), l'élément de sûreté étant conformé comme un assemblage de profils en correspondance de forme entre la fixation (10) et la pièce de carrosserie (30), de façon à créer ainsi un blocage en rotation pour la fixation (10).

2. Liaison d'un châssis de transport à un véhicule à moteur, avec au moins une fixation (10; 10') pour le châssis, qui est reliée par l'intermédiaire d'un élément de fixation (20) à une pièce de carrosserie (30), **caractérisée en ce qu'**elle comprend au moins un élément de sûreté (40; 40'; 40") conçu et disposé de telle manière que lors d'une déformation du châssis, la fixation (10, 10') soit empêchée de tourner autour de l'élément de fixation (20) par le fait que l'élément de sûreté (40) forme une butée (41) entre la fixation (10) et la pièce de carrosserie (30) et est fixé à la pièce de carrosserie (30), la fixation (10 ; 10') présentant une patte (11) sur laquelle le châssis de transport est supporté avec possibilité de rotation et l'élément de sûreté (40") formant une butée (41') entre la patte (11) et la pièce de carrosserie (30).

3. Liaison selon la revendication 1 ou 2, dans laquelle l'élément de sûreté (40') est en forme de plaque.

4. Liaison selon l'une des revendications précédentes, dans laquelle l'élément de sûreté (40') repose contre un bord extérieur de la fixation (10).

5. Liaison selon l'une des revendications précédentes, dans laquelle la fixation (10 ; 10') présente une charnière sur laquelle le châssis de transport est supporté avec possibilité de rotation.

6. Liaison selon la revendication 2, dans laquelle l'élément de sûreté (40") est en forme de goupille.

7. Liaison selon l'une des revendications précédentes, sans laquelle l'élément de sûreté est conçu comme un élément de fixation supplémentaire entre la fixation (10') et la pièce de carrosserie (30).

8. Liaison selon la revendication 7, dans laquelle l'élément de sûreté (40) comprend un assemblage vissé ou riveté.

9. Utilisation d'une liaison selon l'une des revendications précédentes pour l'accrochage d'une cage à roue de secours sur un véhicule à moteur.
